# EUROPÄISCHE PATENTSCHRIFT

(11) **EP 0 393 246 B1**
(45) Veröffentlichungstag und Bekanntmachung des Hinweises auf die Patenterteilung: **08.09.1993**
(21) Anmeldenummer: 89123108.6
(22) Anmeldetag: 14.12.1989
(51) Int. Cl.: F16H 3/08, F16H 57/02

(54) **Gangschaltgetriebe für ein Kraftfahrzeug**
Gearbox for a motor vehicle
Boîte de vitesses pour véhicule à moteur

(30) Priorität: 21.04.1989 DE 3913091 U
(43) Veröffentlichungstag der Anmeldung: 24.10.1990
(73) Patentinhaber: Dr.Ing.h.c. F. Porsche Aktiengesellschaft, 70435 Stuttgart (DE)
(72) Erfinder: Bardoll, Meinrad, Dipl.-Ing. (FH), D-7251 Weissach (DE)

(56) Entgegenhaltungen:
- DE-A- 3 530 017
- FR-A- 2 516 623
- US-A- 3 403 568

## Beschreibung

Die Erfindung betrifft ein Gangschaltgetriebe für ein Kraftfahrzeug, insbesondere Rennfahrzeug nach dem Oberbegriff des Anspruchs 1.

Ein solches Gangschaltgetriebe ist aus DE-OS 35 30 017 bekannt. Zur Lagerung einer Eingangswelle und einer zu ihr parallelen Ausgangswelle eines Gangschaltgetriebes weist das Getriebegehäuse drei Lagerplatten, nämlich eine vordere, achsnahe Lagerplatte, eine Mittenplatte und eine hintere Lagerplatte auf. Die Eingangswelle besteht aus einer Zentralwelle und einer zu ihr konzentrischen Hohlwelle, die auf der Zentralwelle nahe der Mittenplatte gelagert ist. Der zweite und vierte Getriebegang liegen an der einen Seite der Mittenplatte, der erste, dritte, fünfte und Rückwärtsgang an der anderen Seite der Mittenplatte, zwischen ihr und der hinteren Lagerplatte.

Es ist die Aufgabe der Erfindung, ein Gangschaltgetriebe mit einem derartigen Getriebegehäuse so zu gestalten, daß durch Anpassung der Getriebeübersetzungen mit geringem Montageaufwand für unterschiedliche Kraftfahrzeuge und Straßenverläufe optimale Bedingungen erfüllt werden können. Insbesondere für Rennfahrzeuge erfordert jede Rennstrecke eine spezielle Anpassung der Anzahl und Übersetzungen der Getriebegänge, die oft an Ort und Stelle nach Vorversuchen durchgeführt wird.

Zur Lösung dieser Aufgabe dienen die kennzeichnenden Merkmale des Anspruchs 1. Wenn die höheren Getriebegänge in der Gehäuseglocke zwischen der hinteren Lagerplatte und der Zwischenplatte angeordnet sind, können die entsprechenden Zahnräder nach Abnahme der Gehäuseglocke leicht ausgewechselt werden, ohne daß das Getriebe als ganzes ausgebaut werden müßte. Der Rückwärtsgang und die niederen Vorwärtsgänge, die nicht an die jeweilige Rennstrecke angepaßt werden müssen, können immer im Achsgehäuse verbleiben.

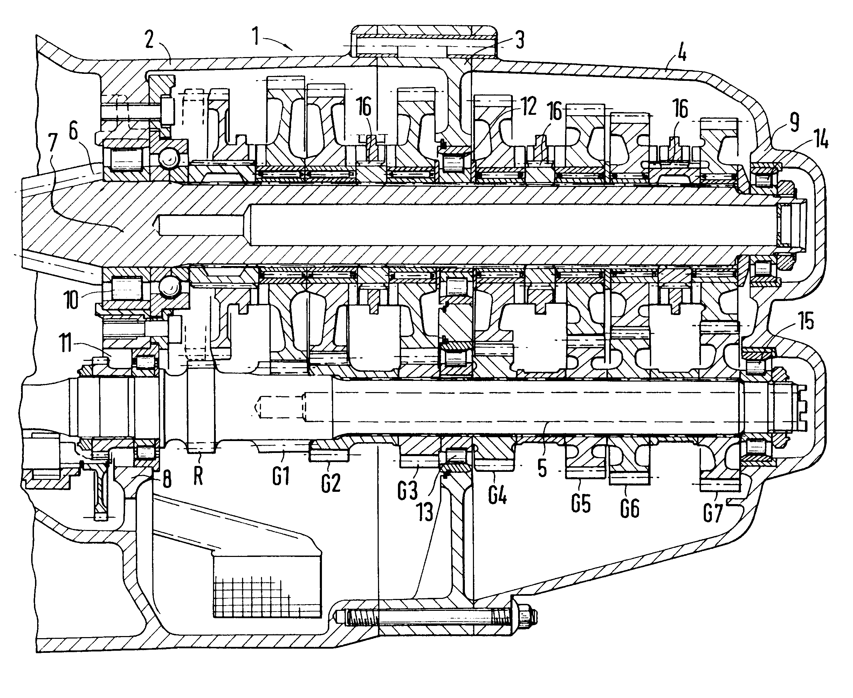

Ein Ausführungsbeispiel der Erfindung ist in der Zeichnung dargestellt und wird nachfolgend erläutert.

Ein Gangschaltgetriebe mit sieben synchronisierten Vorwärtsgängen und einem Rückwärtsgang ist von einem Getriebegehäuse 1 umschlossen, das aus einem Achsgehäuse 2, einer Zwischenplatte 3 und einer Gehäuseglocke 4 zusammengesetzt ist. Die drei Gehäuseteile sind aneinandergeflanscht. Im Getriebegehäuse 1 ist eine vom Fahrzeugmotor angetriebene Eingangswelle 5 und eine zu ihr parallele, die eine Fahrzeugachse mit einem Kegelritzel 6 antreibende Ausgangswelle 7 gelagert. Die Eingangswelle 5 und die Ausgangswelle 7 sind im Getriebegehäuse dreifach gelagert, in einer am Achsgehäuse 2 angegossenen vorderen Lagerplatte 8, in der Zwischenplatte 3 und in einer die rückwärtige Stirnwand der Gehäuseglocke 4 bildenden hinteren Lagerplatte 9. Die vordere Lagerplatte 8 enthält die Lager 10 und 11, die Zwischenplatte 3, die Lager 12 und 13, die hintere Lagerplatte 9 die Lager 14 und 15.

Unmittelbar anschließend an die vordere Lagerplatte 8 ist der Rückwärtsgang angeordnet, danach folgen in dieser Reihenfolge der erste Gang G1, der zweite Gang G2 und der dritte Gang G3. Auf der anderen Seite der Zwischenplatte liegen der vierte Gang G4, der fünfte Gang G5, der sechste Gang G6 und der siebte Gang G7. Die Losräder aller Vorwärtsgänge sind auf der Ausgangswelle 7 gelagert und sind mit ihr über schematisch angedeutete Synchronisiervorrichtungen 16 drehfest verbindbar. Die Festräder aller Vorwärtsgänge sind mit der Eingangswelle 5 mittels Kerbverzahnungen verbunden oder direkt auf sie aufgefräst.

## Patentansprüche

1. Gangschaltgetriebe für ein Kraftfahrzeug, insbesondere Rennfahrzeug, mit einem Getriebegehäuse (1), das aus einem Achsgehäuse (2), einer Zwischenplatte (3) und einer an sie angeflanschten Gehäuseglocke (4) zusammengesetzt ist und mehrere auf einer Eingangswelle (5) und einer zu ihr parallelen Ausgangswelle (7) angeordnete, jeweils aus einem Losrad und einem Festrad bestehende Vorwärtsgänge die alle das Antriebsmoment unmittelbar ohne Zwischenwelle von der Eingangszur Ausgangswelle übertragen und einen Rückwärtsgang enthält, wobei die Eingangswelle (5) und Ausgangswelle (7) in einer achsnahen, vorderen Lagerplatte (8) des Achsgehäuses, in der Zwischenplatte (3) und in einer hinteren Lagerplatte (9) der Gehäuseglocke gelagert sind, dadurch gekennzeichnet, daß der Rückwärtsgang (R) und mindestens ein niederer Vorwärtsgang (G1) zwischen der vorderen Lagerplatte (8) und der Zwischenplatte (3), die höheren Getriebegänge (G2, G3, G4, G5, G6, G7) zwischen der hinteren Lagerplatte (9) und der Zwischenplatte (3) angeordnet sind.

2. Gangschaltgetriebe nach Anspruch 1, dadurch gekennzeichnet, daß eine Gruppe von niederen Vorwärtsgängen (G1, G2, G3) zwischen der vorderen Lagerplatte und der Zwischenplatte, eine Gruppe von höheren Getriebegängen (G4, G5, G6, G7) zwischen der hinteren Lagerplatte (9) und der Zwischenplatte (3) in dieser Reihenfolge angeordnet sind.

3. Gangschaltgetriebe nach Anspruch 1 oder 2, dadurch gekennzeichnet, daß der Rückwärtsgang (R) unmittelbar angrenzend an die vordere Lagerplatte (8) angeordnet ist.

4. Gangschaltgetriebe nach Anspruch 1, dadurch gekennzeichnet, daß die hintere Lagerplatte (9) die Stirnwand der Gehäuseglocke (4) bildet.

5. Gangschaltgetriebe nach Anspruch 1 und 2, dadurch gekennzeichnet, daß die Losräder aller Vorwärtsgänge (G1, G2, G3, G4, G5, G6, G7) auf der Ausgangswelle (7) gelagert sind.

## Claims

1. A gearbox for a motor vehicle, in particular a racing vehicle, having a gearbox casing (1) comprising a shaft housing (2), an intermediate plate (3) and a housing bell (4) flange-mounted thereon, and a plurality of forward gears -- arranged on an input shaft (5) and an output shaft (7) parallel thereto and each comprising a loose wheel and a fixed wheel and all transmitting the driving moment directly from the input shaft to the output shaft without an intermediate shaft -- and one reverse gear, wherein the input shaft (5) and the output shaft (7) are mounted in a front bearing plate (8) of the shaft housing close to the shaft, in the intermediate plate (3) and in a rear bearing plate (9) of the housing bell, characterized in that the reverse gear (R) and at least one lower forward gear (G1) are arranged between the front bearing plate (8) and the intermediate plate (3), and the higher gears (G2, G3, G4, G5, G6, G7) are arranged between the rear bearing plate (9) and the intermediate plate (3).

2. A gearbox according to Claim 1, characterized in that a group of lower forward gears (G1, G2, G3) are arranged between the front bearing plate (8) and the intermediate plate, and a group of higher gears (G4, G5, G6, G7) are arranged in this sequence between the rear bearing plate (9) and the intermediate plate (3).

3. A gearbox according to Claim 1 or 2, characterized in that the reverse gear (R) is arranged immediately adjacent to the front bearing plate (8).

4. A gearbox according to Claim 1, characterized in that the rear bearing plate (9) forms the end face of the housing bell (4).

5. A gearbox according to Claims 1 and 2, characterized in that the loose wheels of all the forward gears (G1, G2, G3, G4, G5, G6, G7) are mounted on the output shaft (7).

## Revendications

1. Boîte de vitesses pour un véhicule automobile, en particulier pour une voiture de course, comportant un boîtier (1) qui est composé d'un boîtier axial (2), d'une plaque intermédiaire et d'une cloche (4) bridée sur celle-ci et qui contient plusieurs marches avant, montées sur un arbre d'entrée (5) et sur un arbre de sortie (7) parallèle au premier, constituées chacune d'un pignon fou et d'un pignon fixe, qui tous transmettent le moment d'entraînement, directement, sans arbre intermédiaire, de l'arbre d'entrée à l'arbre de sortie, ainsi qu'une marche arrière, l'arbre d'entrée (5) et l'arbre de sortie (7) étant montés dans une plaque d'appui (8) avant, proche de l'axe, du boîtier axial, dans la plaque intermédiaire (3) et dans une plaque d'appui (9) arrière de la cloche, caractérisée en ce que la marche arrière (R) et au moins une marche avant (G1) de petite vitesse sont montées entre la plaque d'appui avant (8) et la plaque intermédiaire (3), tandis que les rapports supérieurs (G2, G3, G4, G5, G6, G7) sont montés entre la plaque d'appui arrière (9) et la plaque intermédiaire (3).

2. Boîte de vitesses selon la revendication 1, caractérisée en ce qu'un groupe de marches avant (G1, G2, G3) de petite vitesse est monté entre la plaque d'appui avant et la plaque intermédiaire, un groupe de rapports supérieurs (G4, G5, G6, G7), entre la plaque d'appui arrière (9) et la plaque intermédiaire (3), dans cet ordre.

3. Boîte de vitesses selon la revendication 1 ou 2, caractérisée en ce que la marche arrière (R) est placée directement adjacente à la plaque d'appui (8) avant.

4. Boîte de vitesses selon la revendication 1, caractérisée en ce que la plaque d'appui arrière (9) forme la paroi frontale de la cloche (4).

5. Boîte de vitesses selon les revendications 1 et 2, caractérisée en ce que les pignons fous de toutes les marches avant (G1, G2, G3, G4, G5, G6, G7) sont montés sur l'arbre de sortie (7).
